# EUROPEAN PATENT SPECIFICATION

(11) **EP 2 309 111 B1**
(45) Date of publication and mention of the grant of the patent: **03.04.2013**
(21) Application number: 10175857.1
(22) Date of filing: 08.09.2010
(51) Int. Cl.: F02D 41/00, F02D 41/22, F02B 37/24, F02B 39/16

(54) **Abnormality-determining device for turbo-supercharger**
Vorrichtung zur Erkennung von Anomalien für Turbolader
Dispositif de détermination d'anomalies pour turbocompresseur

(30) Priority: 08.10.2009 JP 2009234222
(43) Date of publication of application: 13.04.2011
(73) Proprietor: Honda Motor Co., Ltd., Tokyo 107-8556 (JP)
(72) Inventor: Sasaki, Yuji, Saitama 351-0193 (JP); Oshima, Yoshikazu, Saitama 351-0193 (JP); Ohnishi, Hiroyuki, Saitama 351-0193 (JP); Iida, Jun, Saitama 351-0193 (JP)
(74) Representative: Prechtel, Jörg

(56) References cited:
- EP-A2- 0 899 437
- EP-A2- 1 557 549
- DE-A1- 10 247 428
- DE-A1-102007 051 872
- US-A1- 2007 130 945

## Description

### BACKGROUND OF THE INVENTION

### Field of the Invention

The present invention relates to an abnormality-determining device for a turbo-supercharger that is provided in an exhaust passage of an internal combustion engine and controls the boost pressure by varying the degree of opening of variable vanes, and more particularly to an abnormality-determining device for a turbo-supercharger, that determines abnormality of the turbo-supercharger, including sticking of the variable vanes.

### Description of the Related Art

Conventionally, an abnormality-determining device for a turbo-supercharger of this kind has been proposed in Japanese Patent No. 3751721. This turbo-supercharger comprises a turbine having variable vanes and disposed in an exhaust passage of an internal combustion engine, and a compressor disposed in an intake passage of the engine for rotation in unison with the turbine. The variable vanes are actuated by e.g. an actuator to vary the opening thereof, whereby the amount of exhaust gases blown to the turbine is changed to change the torque of the compressor, for control of the boost pressure.

When the engine is in idle operation, if the difference between a fuel injection amount and a predetermined amount obtained and stored when the turbo-supercharger is normal is not less than a predetermined value, the abnormality-determining device temporarily determines that the turbo-supercharger suffers from the abnormality of sticking of the variable vanes. In that case, the abnormality-determining device causes the variable vanes to be fully open, and if the difference between the fuel injection amount and the predetermined amount remains not less than the predetermined value in this state, the abnormality-determining device finally determines that the turbo-supercharger suffers from the abnormality of sticking of the variable vanes.

Further, upon finally determining the abnormality of sticking of the variable vanes, the abnormality-determining device lights a warning light to thereby notify a driver of the abnormality of the turbo-supercharger and at the same time carries out a fail mode. In the fail mode, to suppress the amount of emission of smoke, the fuel injection amount is reduced, and at the same time to suppress a rise in pressure in the exhaust passage, a waste gate valve provided at a waste gate that bypasses the turbine is held fully open.

It has been recognized that when the engine is started under a very low temperature condition in which the outside air temperature is very low (e.g. -25°C), sticking of the variable vanes is liable to occur. This is due to the following reason: When the outside air temperature is very low, the combustion temperature of the engine is liable to be lower, and in this case, unburned fuel contained in exhaust gases increases. Further, this unburned fuel contains highly viscous particulates, such as phenols, and the particulates have such characteristics that they solidify at very low temperatures. Therefore, it is considered that if the engine, with the particulates attached to the variable vanes, is stopped, the particulates are cooled by the outside air to solidify, and this causes the variable vanes to stick. Further, it has also been recognized that the solidified particulates are melted when the temperature of exhaust gases becomes not lower than a predetermined temperature (e.g. 100°C), whereby sticking of the variable vanes is resolved.

Further, the boost pressure increases in some cases and decreases in other cases depending on the degree of opening of the variable vanes when the variable vanes stick. In the former cases, there is a possibility that the turbo-supercharger becomes faulty due to excessive supercharging or any of devices of an exhaust system, e.g. an exhaust valve, becomes faulty due to too high pressure in the exhaust passage upstream of the turbine. On the other hand, in the latter cases, the boost pressure is low and the pressure in the exhaust passage does not become too high, and hence there is no possibility that the above-mentioned turbo-supercharger or any device of the exhaust system becomes faulty. From the above, depending on a sticking pattern of the variable vanes, it is not necessarily required to determine sticking of the variable vanes as abnormality.

In the conventional abnormality-determining device, however, when sticking of the variable vanes is confirmed, it is determined that the turbo-supercharger is abnormal and at the same time the fail mode is necessarily performed, irrespective of the sticking pattern. Therefore, even when it is not necessary to determine that the turbo-supercharger is abnormal, i.e. even in the case of the sticking pattern in which the boost pressure becomes lower, the fail mode is performed, and in this case, the fuel injection amount is unnecessarily limited, which degrades drivability.

Such an inconvenience can be resolved by not determining sticking of the variable vanes as abnormality and not performing the fail mode, but as mentioned above, in the case of the sticking pattern in which the boost pressure increases, there is a fear that the turbo-supercharger and any of the devices of the exhaust system becomes faulty.

DE 102 47 428 A on which the preamble of claim 1 is based discloses setting a minimum boost pressure Pb1 and a maximum boost pressures Pb2. These pressures Pb1, PB 2 are used to be compared with the detected boost pressure PB to determine whether or not the variable vanes are normal. From this, the pressure Pb1, Pb2 are not values which are targets of the boost pressure rather reference values.

### SUMMARY OF THE INVENTION

It is an object of the present invention to provide an abnormality-determining device for a turbo-supercharger, which properly decides whether or not to execute abnormality determination of variable vanes during a time period from the start of an internal combustion engine until the variable vanes become non-stuck, thereby being capable of preventing a turbo-supercharger and devices of an exhaust system from becoming faulty, and at the same time is capable of improving drivability.

To attain the above object, the present invention provides an abnormality-determining device for a turbo-supercharger that is provided in an exhaust passage of an internal combustion engine in accordance with claim 1.

In this turbo-supercharger, the variable vanes disposed in the exhaust passage are actuated to thereby vary the opening thereof to change the amount of exhaust gases blown to the turbine, whereby the torque of the turbine is changed for control of the boost pressure. With the arrangement of the abnormality-determining device for the turbo-supercharger, it is determined by the abnormality-determining means whether or not the variable vanes are abnormal, and it is determined by the non-stuck state-determining means whether or not the variable vanes are non-stuck.

As described hereinabove, although the variable vanes sometimes stick when the engine is started under a very low outside air temperature condition, even in such a case, it is not necessary to determine that the variable vanes are abnormal under conditions where there is no possibility that the boost pressure becomes too high. According to the present invention, it is determined whether or not to execute abnormality determination of the variable vanes based on the relationship between the detected boost pressure and the target boost pressure set according to the operating conditions of the engine, during the time period after the start of the engine until it is determined that the variable vanes are non-stuck.

Therefore, e.g. during the above-mentioned time period, under conditions where it is estimated from the relationship between the detected boost pressure and the target boost pressure that the boost pressure is increasing and may become too high, it is possible to execute the abnormality determination of the variable vanes. As a result, when it is determined that the variable vanes are abnormal, it is possible to execute failsafe control including e.g. limiting the fuel injection amount so as to prevent the boost pressure from becoming too high, to thereby prevent the turbo-supercharger and the devices of the exhaust system from becoming faulty. Further, under conditions other than the above-mentioned conditions, there is no possibility that the boost pressure becomes too high, and hence by inhibiting the abnormality determination, it is possible to prevent the operation of the engine from being unnecessarily limited due to the determination that the variable vanes are abnormal, whereby it is possible to improve drivability.

Preferably, the abnormality determination execution-deciding means decides that the abnormality determination of the variable vanes should be executed when the boost pressure is higher than the target boost pressure, and the abnormality determination execution-deciding means decides that the abnormality determination of the variable vanes should be inhibited when the boost pressure is not higher than the target boost pressure.

With the configuration of the preferred embodiment, when the boost pressure is higher than the target boost pressure, the abnormality determination of the variable vanes is executed, and hence it is possible to positively execute the abnormality determination under the conditions where the boost pressure may become too high due to sticking of the variable vanes. As a result, when it is determined that the variable vanes are abnormal, by executing the failsafe control, it is possible to prevent the turbo-supercharger and the devices of the exhaust system from becoming faulty.

On the other hand, when the boost pressure is not higher than the target boost pressure, the abnormality determination of the variable vanes is inhibited, and hence it is possible to inhibit the failsafe control associated with the abnormality determination under the conditions where there is no possibility that the boost pressure becomes too high, and as a result, it is possible to improve drivability, while preventing the turbo-supercharger etc. from becoming faulty.

The abnormality-determining device further comprises exhaust gas temperature-detecting means for detecting temperature in the exhaust passage, and the non-stuck state-determining means determines that the variable vanes are non-stuck when a state where the detected temperature in the exhaust passage is not lower than a predetermined temperature continues for not shorter than a predetermined time period.

As described above, even when the variable vanes are stuck due to attachment and solidification of particulates at the start of the engine, the particulates are warmed and melted by exhaust gases thereafter, whereby the stuck state is resolved. According to the present invention, it is determined that the variable vanes are non-stuck when the state where the temperature detected in the exhaust passage is not lower than the predetermined temperature continues for not shorter than the predetermined time period, and hence even when the variable vanes are stuck due to attachment and solidification of particulates at the start of the engine, it is possible to properly determine the state where the particulates are melted thereafter and the sticking is resolved. Therefore, when the engine is started, it is possible to accurately determine the non-stuck state of the variable vanes, including a state where no such sticking of the variable vanes occurred.

Preferably, the abnormality-determining device further comprises measuring means for measuring an operation time period of the engine after the start of the engine, outside air temperature-detecting means for detecting temperature of outside air, and predetermined time period-setting means for setting a predetermined time period longer as the detected outside air temperature is lower, and the non-stuck state-determining means determines that the variable vanes are non-stuck when the measured operation time period is not shorter than the predetermined time period, after the start of the engine.

With the configuration of the preferred embodiment, it is determined that the variable vanes are non-stuck when the operation time period after the start of the engine is not shorter than the predetermined time period, and hence it is possible to accurately determine the non-stuck state of the variable vanes. Further, as the outside air temperature is lower, the particulates are more liable to solidify, and the variable vanes are more liable to stick, and at the same time it takes longer time for the particulates to be melted in accordance with increase in temperature of exhaust gases to thereby resolve the sticking of variable vanes. For this reason, the predetermined time period to be compared with the operation time period after the start of the engine is set longer as the outside air temperature is lower, whereby it is possible to properly set the predetermined time period according to the outside air temperature.

Preferably, the abnormality-determining device further comprises target opening-setting means for setting a target opening degree which is a target of degree of opening of the variable vanes according to the operating conditions of the engine, control means for controlling the degree of opening of the variable vanes according to the set target opening degree, and opening-detecting means for detecting the degree of opening of the variable vanes, and the non-stuck state-determining means determines that the variable vanes are non-stuck when the state where a difference between the detected degree of opening of the variable vanes and the target opening degree is not more than a predetermined value continues for not shorter than a predetermined time period.

With the configuration of the preferred embodiment, the target opening degree of the variable vanes is set according to the operating conditions of the engine, and the degree of opening of the variable vanes is controlled by the control means according to the set target opening degree. If the variable vanes are not stuck, the degree of opening of the variable vanes smoothly converges to the target opening degree, whereby the difference between the both becomes small. As a result, when the state where the difference between the degree of opening of the variable vanes and the target opening degree is not more than the predetermined value continues for not shorter than the predetermined time period, it is possible to properly determine that the variable vanes are non-stuck.

The above and other objects, features, and advantages of the present invention will become more apparent from the following detailed description taken in conjunction with the accompanying drawings.

### BRIEF DESCRIPTION OF THE DRAWINGS

FIG. 1 is a schematic diagram of an internal combustion engine to which the present invention is applied;
FIG. 2 is a schematic block diagram of an abnormality-determining device;
FIG. 3 is a flowchart showing a main flow of a boost pressure control process;
FIG. 4 is a flowchart showing a main flow of a process for determining abnormality of a turbocharger;
FIG. 5 is a flowchart showing a subroutine of a process for determining a stuck state of variable vanes; and
FIG. 6 is a diagram showing an example of a map used in the process of FIG. 5.

### DETAILED DESCRIPTION OF PREFERRED EMBODIMENTS

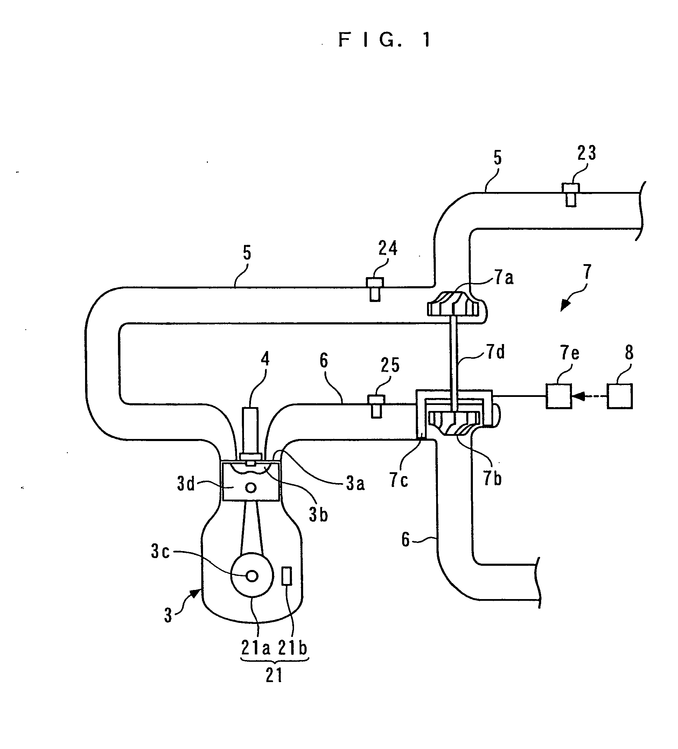

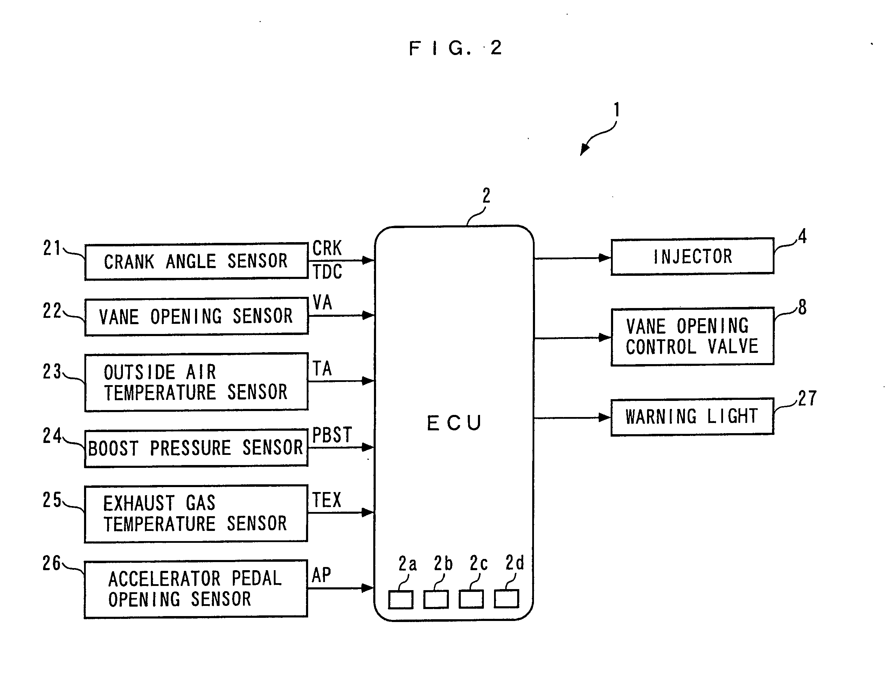

The invention will now be described in detail with reference to the drawings showing preferred embodiment thereof. As shown in FIG. 2, an abnormality-determining device 1 according to the present embodiment includes an ECU 2 configured to perform various controlling processes described hereinafter, and is applied to an internal combustion engine (hereinafter referred to as "the engine") 3 shown in FIG. 1. The engine 3 is e.g. a four-cylinder diesel engine installed on a vehicle (not shown), and includes a turbocharger 7.

A cylinder head 3a of the engine 3 has a fuel injection valve (hereinafter referred to as "the injector") 4 mounted therethrough such that it faces a combustion chamber 3b. The valve-opening time period and the valve-opening timing of the injector 4 are controlled by a drive signal from the ECU 2, whereby a fuel injection amount and fuel injection timing of fuel are controlled.

Further, the engine 3 is provided with a crank angle sensor 21. The crank angle sensor 21 comprises a magnet rotor 21a and an MRE (magnetic resistance element) pickup 21b, and delivers a CRK signal and a TDC signal, which are both pulse signals, to the ECU 2 in accordance with rotation of a crankshaft 3c.

Each pulse of the CRK signal is delivered whenever the crankshaft 3c rotates through a predetermined angle (e.g. 30°). The ECU 2 calculates a rotational speed of the engine 3 (hereinafter referred to as "the engine speed") NE based on the CRK signal. The TDC signal indicates that a piston 3d in one of the cylinders is in a predetermined crank angle position slightly before the TDC position at the start of the intake stroke, and each pulse thereof is delivered whenever the crankshaft 3c rotates through 180° when the engine 3 is of a four-cylinder type as in the present embodiment.

The above-mentioned turbocharger 7 comprises a compressor blade 7a disposed in an intake passage 5, a turbine blade 7b disposed in an exhaust passage 6 and integrally connected to the compressor blade 7a via a turbine shaft 7d, a plurality of variable vanes 7c (only two of which are shown), and a vane actuator 7e for actuating the variable vanes 7c.

In the turbocharger 7, as the turbine blade 7b is driven for rotation by exhaust gases flowing through the exhaust passage 6, the compressor blade 7a is rotated in unison with the turbine blade 7b, whereby a supercharging operation for supercharging intake air is carried out.

The variable vanes 7c are pivotally mounted on a wall of a housing, not shown, which accommodates the turbine blade 7b, and are mechanically connected to the vane actuator 7e.

The vane actuator 7e is of a diaphragm type which is operated by negative pressure. The vane actuator 7e has negative pressure supplied from a negative pressure pump, not shown, through a negative pressure supply passage, not shown. A vane opening control valve 8 is disposed in an intermediate portion of the negative pressure supply passage.

The vane opening control valve 8 is formed by an electromagnetic valve, and the degree of opening thereof is controlled by a drive signal from the ECU 2, whereby negative pressure to be supplied to the vane actuator 7e is changed. In accordance with a change in the supplied negative pressure, the degree of opening of the variable vanes 7c (hereinafter referred to as "the vane opening") is varied, whereby boost pressure is controlled. More specifically, as the vane opening is smaller, the amount of exhaust gases blown to the turbine blade 7b is larger, whereby boost pressure becomes higher, and becomes approximately equal to 0 (unsupercharged state) when the variable vanes 7c are fully open. Further, when negative pressure is not supplied to the vane actuator 7e, the variable vanes 7c are held fully open.

A vane opening sensor 22 is disposed in the exhaust passage 6 in the vicinity of the variable vane 7c. The vane opening sensor 22 detects a vane opening VA to deliver a signal indicative of the sensed vane opening VA to the ECU 2.

Further, the intake passage 5 has an outside air temperature sensor 23 and a boost pressure sensor 24 inserted therein at respective locations upstream and downstream of the compressor blade 7a. The outside air temperature sensor 23 detects an outside air temperature TA to deliver a signal indicative of the sensed outside air temperature TA to the ECU 2, while the boost pressure sensor 24 detects a boost pressure PBST to deliver a signal indicative of the sensed boost pressure PBST to the ECU 2.

The exhaust passage 6 has an exhaust gas temperature sensor 25 inserted therein at a location upstream of the turbine blade 7b. The exhaust gas temperature sensor 25 detects a temperature in the exhaust passage 6 (hereinafter referred to as "the exhaust gas temperature") TEX to deliver a signal indicative of the sensed exhaust gas temperature TEX to the ECU 2.

Further, an accelerator pedal opening sensor 26 detects a stepped-on amount of an accelerator pedal (not shown) of the vehicle (hereinafter referred to as "the accelerator pedal opening") AP and delivers a signal indicative of the sensed accelerator pedal opening AP to the ECU 2. Further, a warning light 27 for warning a driver of abnormality of the turbocharger 7 is connected to the ECU 2.

The ECU 2 is implemented by a microcomputer comprising a CPU, a RAM, a ROM and an I/O interface (none of which are specifically shown). Further, the ECU 2 includes first to fourth timers 2a to 2d which are count-up timers. The ECU 2 determines operating conditions of the engine 3 based on the detection signals from the aforementioned sensors 21 to 26, and depending on the determined operating conditions of the engine 3, executes various control processes, such as a process for controlling fuel injection, including a fuel injection amount, and a process for controlling boost pressure by the turbocharger 7. Further the ECU 2 executes a process for determining abnormality of the turbocharger 7.

In the present embodiment, the ECU 2 corresponds to abnormality-determining means, non-stuck state-determining means, operating condition-detecting means, target boost pressure-setting means, abnormality determination execution-deciding means, predetermined time period-setting means, target opening-setting means, and control means.

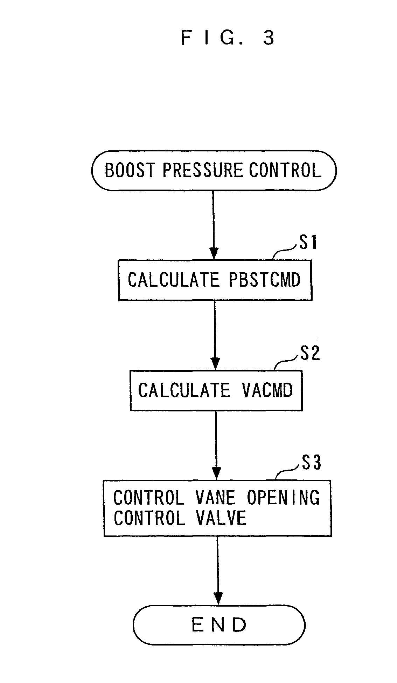

FIG. 3 is a flowchart showing the above-mentioned process for controlling boost pressure. The present process is executed at a predetermined repetition period. In the present process, first, in a step 1 (shown as S1 in abbreviated form in FIG. 3; the following steps are also shown in abbreviated form), a target boost pressure PBSTCMD which is a target of the boost pressure PBST is calculated by searching a predetermined map (not shown) according to the engine speed NE and the fuel injection amount.

Next, a target opening VACMD which is a target of the vane opening VA is calculated according to the calculated target boost pressure PBSTCMD (step 2).

Then, the degree of opening of the vane opening control valve 8 is controlled according to the calculated target opening VACMD. This causes the vane opening VA to be controlled to the target opening VACMD, whereby the boost pressure PBST is controlled such that it becomes equal to the target boost pressure PBSTCMD.

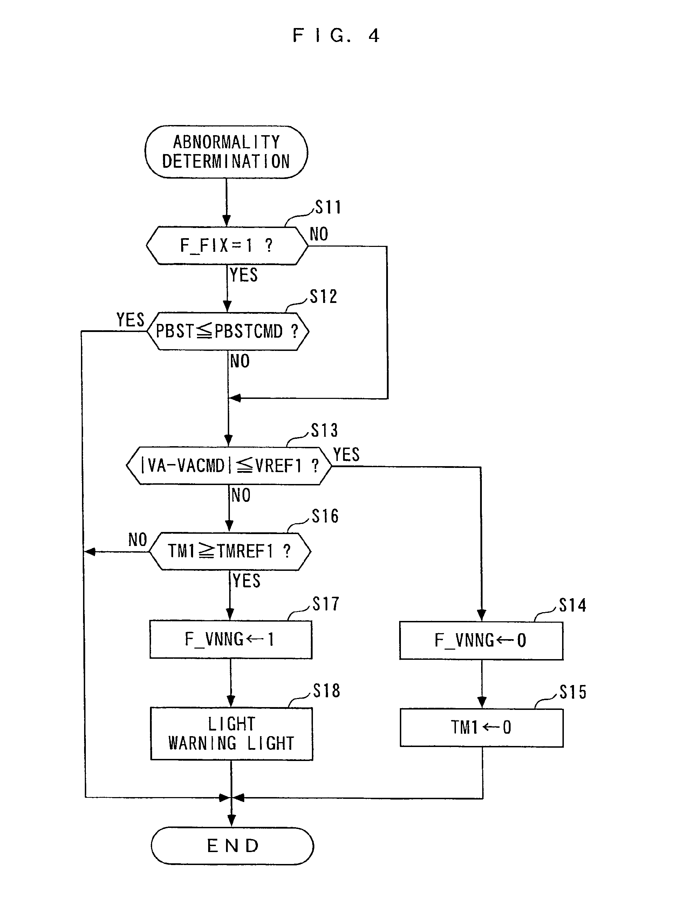

FIG. 4 is a flowchart showing the above-mentioned process for determining abnormality of turbocharger 7. The present process is executed at a predetermined repetition period. In the present process, first, in a step 11, it is determined whether or not a sticking flag F_FIX is equal to 1. The sticking flag F_FIX is set to 1 when it is determined that the variable vanes 7c are stuck. A process for determining the sticking of the variable vanes 7c will be described hereinafter.

If the answer to this question is affirmative (YES), i.e. if it is determined that the variable vanes 7c are stuck, it is determined whether or not the boost pressure PBST is not lower than the target boost pressure PBSTCMD calculated in the step 1 (step 12). If the answer to this question is affirmative (YES), although the variable vanes 7c are stuck, the sticking pattern thereof is the one in which the boost pressure PBST becomes lower or does not change (hereinafter referred to as "the pressure decreasing pattern"), so that the present process is immediately terminated without executing the abnormality determination.

Further, if the answer to the question of the step 12 is negative (NO), the sticking pattern of the variable vanes 7c is the one in which boost pressure PBST increases (hereinafter referred to as "the pressure increasing pattern"), so that the process proceeds to steps 13 et seq., wherein the abnormality determination is executed. On the other hand, if the answer to the question of the step 11 is negative (NO), i.e. if it is determined that the variable vanes 7c are non-stuck, the process skips over the step 12 to the step 13.

In the step 13, it is determined whether or not the absolute value of the difference between the vane opening VA and the target opening VACMD calculated in the step 2 (= |VA - VACMD|) is not more than a first predetermined value VREF1. The first predetermined value VREF1 is set to e.g. a value equal to 10% of the target opening VACMD.

If the answer to the question of the step 13 is affirmative (YES), i.e. if |VA - VACMD | ≦ VREF1 holds, the vane opening VA is approximately equal to the target opening VACMD, and hence it is judged that the variable vanes 7c are normal, and to indicate this fact, an abnormality flag F_VNNG is set to 0 (step 14). Next, a timer value TM1 of the first timer 2a (first timer value) is reset to 0 (step 15), followed by terminating the present process.

On the other hand, if the answer to the question of the step 13 is negative (NO), i.e. if |VA - VACMD| > VREF1 holds, it is determined whether or not the first timer value TM1 is not less than a first predetermined time period TMREF1 (step 16). If the answer to this question is negative (NO), the present process is immediately terminated.

Further, if the answer to the question of the step 16 is affirmative (YES), i.e. if the state where |VA - VACMD| > VREF1 holds has continued for not shorter than the first predetermined time period TMREF1, it is judged that the variable vanes 7c suffer from abnormality due to any of not only the sticking of the variable vanes 7c but also disruption of the negative pressure supply passage, disconnection of a transfer path of a drive signal to the vane opening control valve 8, etc. and to indicate this fact, the abnormality flag F_VNNG is set to 1 (step 17).

Next, to warn the driver of abnormality of the turbocharger 7, the warning light 27 is lighted (step 18), followed by terminating the present process. Further, when it is determined that the turbocharger 7 is abnormal, failsafe control is executed to limit the fuel injection amount so as to prevent the boost pressure from increasing.

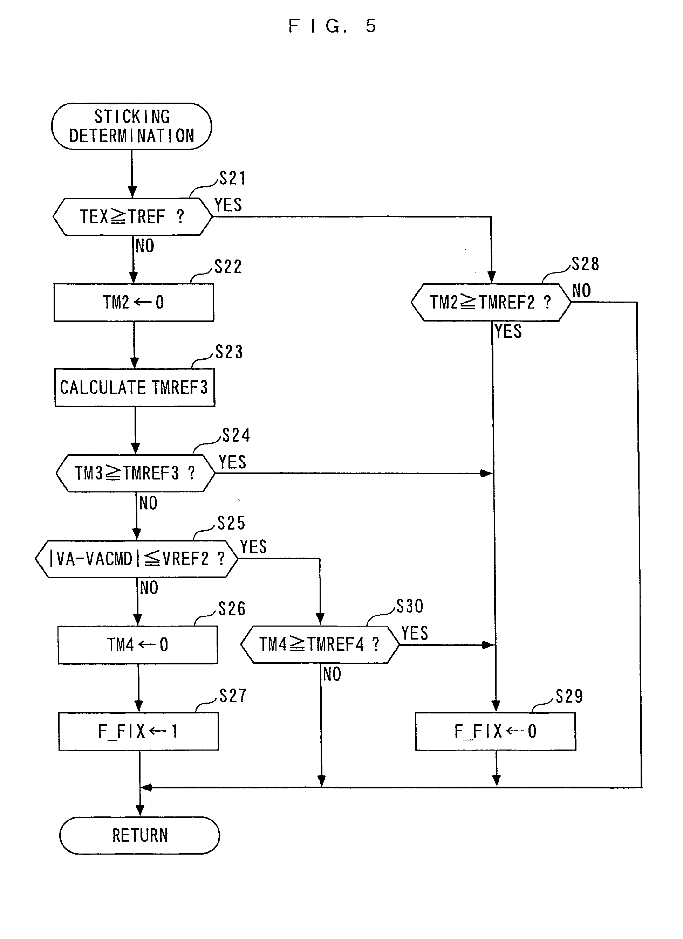

FIG. 5 is a flowchart showing a subroutine of the above-mentioned process for determining the stuck state of variable vanes 7c. In the present process, first, in a step 21, it is determined whether or not the exhaust gas temperature TEX is not lower than a predetermined temperature TREF (e.g. 150°C). If the answer to this question is negative (NO), a timer value TM2 of the second timer 2b (second timer value) is reset to 0 (step 22).

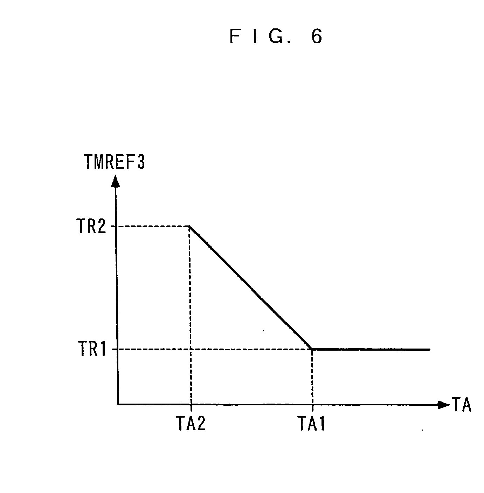

Next, a third predetermined time period TMREF3 is calculated by searching a map shown in FIG. 6 according to the outside air temperature TA (step 23). In this map, the third predetermined time period TMREF3 is set to a first predetermined value TR1 (e.g. 0 sec.) when the outside air temperature TA is not lower than a first predetermined temperature TA1 (e.g. 0°C), and is set to a second predetermined value TR2 (e.g. 120 sec.) which is larger than the first predetermined value TR1 when the outside air temperature TA is equal to a second predetermined temperature TA2 (e.g. -30°C) which is lower than the first predetermined temperature TA1. Further, when the outside air temperature TA is between the first predetermined temperature TA1 and the second predetermined temperature TA2, the third predetermined time period TMREF3 is set to a larger value between the first and second predetermined values TR1 and TR2 as the outside air temperature TA is lower.

Next, it is determined whether or not a timer value TM3 of the third timer 2c (third timer value) is not less than the third predetermined time period TMREF3 (step 24). It should be noted that the third timer value TM3 is reset to 0 when the engine 3 is started, i.e. when an ignition switch (not shown) is turned on.

If the answer to the question of the step 24 is negative (NO), i.e. if the third predetermined time period TMREF3 has not elapsed after the start of the engine 3, it is determined whether or not the absolute value of the difference between the vane opening VA and the target opening VACMD (= |VA - VACMD|) is not more than a second predetermined value VREF2 (step 25). If the answer to this question is negative (NO), a timer value TM4 of the fourth timer 2d (fourth timer value) is reset to 0 (step 26).

As described above, if all of the answers to the questions of the steps 21, 24, and 25 are negative (NO), i.e. if the exhaust gas temperature TEX is not higher than the predetermined temperature TREF, the third predetermined time period TMREF3 has not elapsed after the start of the engine 3, and at the same time the absolute value of the difference between the vane opening VA and the target opening VACMD is larger than the second predetermined value VREF2, it is determined that the variable vanes 7c are stuck, and to indicate this fact, the sticking flag F_FIX is set to 1 (step 27), followed by terminating the present process.

On the other hand, if the answer to the question of the step 21 is affirmative (YES), i.e. if the exhaust gas temperature TEX is not lower than the predetermined temperature TREF, it is determined whether or not the second timer value TM2 is not less than a second predetermined time period TMREF2 (e.g. 10 to 20 sec.) (step 28). If the answer to this question is negative (NO), the present process is terminated.

Further, if the answer to the question of the step 28 is affirmative (YES), i.e. if the state where the exhaust gas temperature TEX is not lower than the predetermined temperature TREF has continued for not shorter than the second predetermined time period TMREF2, it is supposed that even if the variable vanes 7c were stuck due to attachment and solidification of particulates at the start of the engine 3, the particulates have been warmed and melted by exhaust gases by the operation of the engine 3 thereafter, whereby the sticking should have been resolved, and hence it is determined that the variable vanes 7c are non-stuck, and to indicate this fact, the sticking flag F_FIX is set to 0 (step 29), followed by terminating the present process.

On the other hand, if the answer to the question of the step 24 is affirmative (YES), i.e. if time which is not shorter than the third predetermined time period TMREF3 has elapsed after the start of the engine 3, it is supposed that even when the variable vanes 7c were stuck due to attachment and solidification of particulates at the start of the engine 3, the particulates have been warmed and melted by exhaust gases, whereby the sticking should have been resolved, and hence it is determined that the variable vanes 7c are non-stuck, and the process proceeds to the step 29 to set the sticking flag F_FIX to 0, followed by terminating the present process.

Further, if the answer to the question of the step 25 is affirmative (YES), i.e. if |VA - VACMD| ≦ VREF2 holds, it is determined whether or not the fourth timer value TM4 is not less than a fourth predetermined time period TMREF4 (step 30). If the answer to this question is negative (NO), the present process is terminated.

On the other hand, if the answer to the question of the step 30 is affirmative (YES), i.e. if the state where |VA - VACMD| ≦ VREF2 holds has continued for not shorter than the fourth predetermined time period TMREF4, it is determined that the vane opening VA has stably converged to the target opening VACMD, and the variable vanes 7c are non-stuck, so that the process proceeds to the step 29 to set the sticking flag F_FIX to 0, followed by terminating the present process.

As described above, according to the present embodiment, during the time period after the start of the engine 3 until it is determined that the variable vanes 7c are non-stuck (YES to the step 11), when the boost pressure PBST is higher than the target boost pressure PBSTCMD, it is judged that the sticking pattern of the variable vanes 7c is the pressure increasing pattern, so that the abnormality determination of the turbocharger 7 is executed, and hence under conditions where there is a possibility that the boost pressure PBST becomes too high due to the sticking of the variable vanes 7c, it is possible to positively execute the abnormality determination. Further, when it is determined that the turbocharger 7 is abnormal, the failsafe control is carried out, and hence it is possible to prevent the turbocharger 7 and any of the devices of the exhaust system from becoming faulty.

On the other hand, when the boost pressure PBST is not higher than the target boost pressure PBSTCMD, it is judged that the sticking pattern of the variable vanes 7c is the pressure decreasing pattern, and hence the abnormality determination of the turbocharger 7 is inhibited. Therefore, under conditions where there is no possibility that the boost pressure PBST becomes too high, it is possible to inhibit the failsafe control resulting from the determination of abnormality. As a result, it is possible to improve drivability, while preventing the above-mentioned turbocharger 7 etc. from becoming faulty.

Further, the state where the exhaust gas temperature TEX is not lower than the predetermined temperature TREF has continued for not shorter than the second predetermined time period TMREF2 (YES to the steps 21 and 28), it is determined that the variable vanes 7c are non-stuck, and hence even when the variable vanes 7c were stuck at the start of the engine 3, it is possible to properly determine the state where the particulates have been melted after the start of the engine 3 and the sticking is resolved. As a result, it is possible to accurately determine the non-stuck state of the variable vanes 7c.

Further, when the time which is not shorter than the third predetermined time period TMREF3 has elapsed after the start of the engine 3 (YES to the step 24), it is determined that the variable vanes 7c are non-stuck, and hence it is possible to accurately carry out the sticking determination. Further, since the third predetermined time period TMREF3 is set longer as the outside air temperature TA is lower, it is possible to properly set the third predetermined time period TMREF3 according to the outside air temperature TA.

Further, since it is determined that the variable vanes 7c are non-stuck when the state where the absolute value of the difference between the vane opening VA and the target opening VACMD (= |VA - VACMD|) is not more than the second predetermined value VREF2 has continued for not shorter than the fourth predetermined time period TMREF4, it is possible to properly execute the determination.

It should be noted that the present invention is by no means limited to the above-described embodiment, but it can be practiced in various forms. For example, although in the above-described embodiment, whether or not to execute the abnormality determination in the state where it is determined that the variable vanes 7c are stuck is decided according to the magnitude relationship between the boost pressure PBST and the target boost pressure PBSTCMD, this is not limitative, but the decision may be carried out according to a result of comparison of the difference or ratio between the boost pressure and the target boost pressure, with a predetermined value. In this case, when the difference or ratio between the two is not smaller than the predetermined value, it is decided that the abnormality determination should be executed.

Further, although in the above-described embodiment, the fuel injection amount is limited as the failsafe control, this is not limitative, but the waste gate valve provided in the waste gate connected to the exhaust passage in a manner bypassing the turbine may be held fully open, for example.

Further, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

It is further understood by those skilled in the art that the foregoing are preferred embodiments of the invention, and that various changes and modifications may be made without departing from the scope of the claims.

An abnormality-determining device for a turbo-supercharger, which properly decides whether or not to execute the abnormality determination of variable vanes during a time period from the start of an internal combustion engine until the variable vanes become non-stuck, thereby being capable of preventing a turbo-supercharger and devices of an exhaust system from becoming faulty, and at the same time is capable of improving drivability. The abnormality-determining device determines whether or not the variable vanes are abnormal, and at the same time determines whether or not the variable vanes are non-stuck. Further, during the time period after the start of the engine until it is determined that the variable vanes are non-stuck, the abnormality-determining device determines whether or not to execute abnormality determination of the variable vanes based on a relationship between the detected boost pressure and the set target boost pressure.

## Claims

1. An abnormality-determining device for a turbo-supercharger (7) that is provided in an exhaust passage (6) of an internal combustion engine (3), includes variable vanes (7c), and controls boost pressure by changing a degree of opening of the variable vanes (7c), comprising:
abnormality-determining means (S13 to S18) for determining whether
or not the variable vanes (7c) are abnormal stack or non-stack;
boost pressure-detecting means (24) for detecting pressure of intake air drawn into the engine as boost pressure (PBST);
operating condition-detecting means for detecting operating conditions of the engine;
**characterized by** comprising
exhaust gas temperature-detecting means (25) for detesting temperature in the exhaust passage (6), target boost pressure-setting means for setting target boost pressure (PBSTCMD) which is a target of the boost pressure according to the detected operating conditions of the engine; and
abnormality determination execution-deciding means (S12) for deciding whether or not to execute abnormality determination of the variable vanes (7c) by said abnormality-determining means based on a relationship between the detected boost pressure (PBST) and the set target boost pressure (PBSTCMD), for determining whether or not the variable vanes (7c) are non-stuck; where
the abnormality determination execution-deciding means (S12) decides during a time period after the start of the engine (3) until it is determined by said non-stuck state-determining means that the variable vanes (7c) are non-stuck when a state where the detected temperature (TEX) in the exhaust passage (6) is not lower than a predetermined temperature (TREF) continues for not shorter than a predetermined time period.

2. The abnormality-determining device as claimed in claim 1, wherein said abnormality determination execution-deciding means decides (S12) that the abnormality determination of the variable vanes (7c) should be executed when the boost pressure (PBST) is higher than the target boost pressure (PBSTCMD), and
wherein said abnormality determination execution-deciding means decides that the abnormality determination of the variable vanes (7c) should be inhibited when the boost pressure (PBST) is not higher than the target boost pressure (PBSTCMD).

3. The abnormality-determining device as claimed in claim 1 or 2, further comprising:
measuring means for measuring an operation time period of the engine after the start of the engine;
outside air temperature-detecting means (23) for detecting temperature (TA) of outside air; and
predetermined time period-setting means for setting a predetermined time period longer as the detected outside air temperature (TA) is lower, and
wherein said non-stuck state-determining means determines that the variable vanes (7c) are non-stuck when the measured operation time period is not shorter than the predetermined time period, after the start of the engine.

4. The abnormality-determining device as claimed in any one of claims 1 to 3, further comprising:
target opening-setting means for setting a target opening degree (VACMD) which is a target of degree of opening (VA) of the variable vanes (7c) according to the operating conditions of the engine;
control means for controlling the degree of opening (VA) of the variable vanes (7c) according to the set target opening degree (VACMD); and
opening-detecting means (22) for detecting the degree of opening (VA) of the variable vanes, and
wherein said abnormality-determining means determines that the variable vanes are in the abnormal state when a difference between the detected degree of opening (VA) of the variable vanes (7c) and the target opening degree (VACMD) is not more than a predetermined value.

## Patentansprüche

1. Abnormalitätsbestimmungsvorrichtung für einen Turbolader (7), der in einem Auslasskanal (6) eines Verbrennungsmotors (3) vorgesehen ist, variable Flügel (7c) enthält und den Ladedruck durch Ändern eines Öffnungsgrads der variablen Flügel (7c) steuert/regelt, umfassend:
ein Abnormalitätsbestimmungsmittel (S13 bis S18) zum Bestimmen, ob die variablen Flügel (7c) abnormal sind, festsitzen oder nicht festsitzen oder nicht;
ein Ladedruckerfassungsmittel (24) zum Erfassen des Drucks von in den Motor gesaugter Einlassluft als Ladedruck (PBST);
ein Betriebzustanderfassungsmittel zum Erfassen von Betriebszuständen des Motors;
**dadurch gekennzeichnet, dass** sie umfasst:
ein Abgastemperaturerfassungsmittel (25) zum Erfassen der Temperatur im Auslasskanal (6),
ein Sollladedrucksetzmittel zum Setzen eines Sollladedrucks (PBSTCMD), der ein Sollwert des Ladedrucks ist, gemäß den erfassten Betriebszuständen des Motors; und
ein Abnormalitätsbestimmungsausführungsentscheidungsmittel (S12) zum Entscheiden, ob die Abnormalitätsbestimmung der variablen Flügel (7c) durch das Abnormalitätsbestimmungsmittel ausgeführt werden soll oder nicht, basierend auf einer Beziehung zwischen dem erfassten Ladedruck (PBST) und dem gesetzten Sollladedruck (PBSTCMD),
und Nicht-Festsitzzustandbestimmungsmittel zum Bestimmen, ob die variablen Flügel (7c) nicht festsitzen oder nicht, worin das Abnormalitätsbestimmungsausführungsentscheidungsmittel (S12) während einer Zeitperiode nach dem Start des Motors (3) entscheidet,
bis durch das Nicht-Festsitzzustandbestimmungsmittel bestimmt wird,
dass die variablen Flügel (7c) nicht festsitzen, wenn ein Zustand, wo die erfasste Temperatur (TEX) im Auslasskanal (6) nicht niedriger als eine vorbestimmte Temperatur (TREF) ist, für nicht kürzer als eine vorbestimmte Zeitperiode fortdauert.

2. Die Abnormalitätsbestimmungsvorrichtung nach Anspruch 1, worin das Abnormalitätsbestimmungsausführungsentscheidungsmittel (S12) entscheidet, dass die Abnormalitätsbestimmung der variablen Flügel (7c) ausgeführt werden sollte, wenn der Ladedruck (PBST) höher als der Sollladedruck (PBSTCMD) ist, und
worin das Abnormalitätsbestimmungsausführungsentscheidungsmittel entscheidet, dass die Abnormalitätsbestimmung der variablen Flügel (7c) unterbunden werden sollte, wenn der Ladedruck (PBST) nicht höher als der Sollladedruck (PBSTCMD) ist.

3. Die Abnormalitätsbestimmungsvorrichtung nach Anspruch 1 oder 2, die ferner umfasst:
ein Messmittel zum Messen einer Betriebszeitdauer des Motors nach dem Start des Motors;
ein Außenlufttemperaturerfassungsmittel (23) zum Erfassen der Temperatur (TA) von Außenluft; und
ein Vorbestimmte-Zeitperiode-Setzmittel zum Setzen einer vorbestimmten Zeitperiode, die länger wird, wenn die erfasste Außenlufttemperatur (TA) niedriger ist, und
worin das Nicht-Festsitzzustandbestimmungsmittel bestimmt, dass die variablen Flügel (7c) nicht festsitzen, wenn die gemessene Betriebszeitdauer nach dem Start des Motors nicht kürzer als die vorbestimmte Zeitperiode ist.

4. Die Abnormalitätsbestimmungsvorrichtung nach einem der Ansprüche 1 bis 3, die ferner umfasst:
ein Sollöffnungssetzmittel zum Setzen eines Sollöffnungsgrads (VACMD), der ein Sollöffnungsgrad (VA) der variablen Flügel (7c) ist, gemäß den Betriebszuständen des Motors;
ein Steuermittel zum Steuern/Regeln des Öffnungsgrads (VA) der variablen Flügel (7c) gemäß dem gesetzten Sollöffnungsgrad (VACMD);
und
ein Öffnungserfassungsmittel (22) zum Erfassen des Öffnungsgrads (VA) der variablen Flügel, und
worin das Abnormalitätsbestimmungsmittel bestimmt, dass die variablen Flügel im abnormalen Zustand sind, wenn eine Differenz zwischen dem erfassten Öffnungsgrad (VA) der variablen Flügel (7c) und dem Sollöffnungsgrad (VACMD) nicht größer als ein vorbestimmter Wert ist.

## Revendications

1. Dispositif de détermination d'anomalies pour turbocompresseur (7) qui est prévu dans un passage d'échappement (6) d'un moteur à combustion interne (3), comprend des aubes directrices variables (7c) et régule la pression de suralimentation en changeant un degré d'ouverture des aubes directrices variables (7c), comprenant:
un moyen de détermination d'anomalies (S13 à S18) pour déterminer si les aubes directrices variables (7c) sont oui ou non anormalement bloquées ou non bloquées;
un moyen de détection de la pression de suralimentation (24) pour détecter la pression de l'air d'admission aspiré dans le moteur comme pression de suralimentation (PBST);
un moyen de détection de conditions d'exploitation pour détecter les conditions d'exploitation du moteur;
**caractérisé en ce qu'**il comprend
un moyen de détection de la température des gaz d'échappement (25) pour détecter la température dans le passage d'échappement (6),
un moyen de réglage de la pression de suralimentation à atteindre pour définir la pression de suralimentation à atteindre (PBSTCMD), qui est une valeur de pression de suralimentation à atteindre en fonction des conditions d'exploitation détectées du moteur; et
un moyen de décision d'exécution de la détermination d'anomalies (S12) pour décider d'exécuter ou non la détermination d'anomalies des aubes directrices variables (7c) par ledit moyen de détermination d'anomalies sur base d'une relation entre la pression de suralimentation détectée (PBST) et la pression de suralimentation à atteindre définie (PBSTCMD),
et un moyen de détermination d'état non bloqué prévu pour déterminer si les aubes directrices variables (7c) sont non bloquées; dans lequel
le moyen de décision d'exécution de la détermination d'anomalies (S12) décide durant une période de temps après le démarrage du moteur (3) jusqu'à ce qu'il soit déterminé par ledit moyen de détermination d'état non bloqué que les aubes directrices variables (7c) sont non bloquées lorsqu'un état dans lequel la température détectée (TEX) dans le passage d'échappement (6) n'est pas inférieure à la température prédéterminée (TREF) persiste pendant une durée qui n'est pas inférieure à une période de temps prédéterminée.

2. Dispositif de détermination d'anomalies selon la revendication 1, dans lequel ledit moyen de décision d'exécution de la détermination d'anomalies décide (S12) que la détermination d'anomalies des aubes directrices variables (7c) devrait être exécutée lorsque la pression de suralimentation (PBST) est supérieure à la pression de suralimentation à atteindre (PBSTCMD), et
dans lequel ledit moyen de décision d'exécution de la détermination d'anomalies décide que la détermination d'anomalies des aubes directrices variables (7c) devrait être inhibée lorsque la pression de suralimentation (PBST) n'est pas supérieure à la pression de suralimentation à atteindre (PBSTCMD).

3. Dispositif de détermination d'anomalies selon la revendication 1 ou 2, comprenant en outre:
un moyen de mesure une période de temps de fonctionnement du moteur après le démarrage du moteur;
un moyen de détection de la température de l'air extérieur (23) pour détecter la température (TA) de l'air extérieur; et
un moyen de définition d'une période de temps prédéterminée pour définir une période de temps prédéterminée plus longue lorsque la température détectée de l'air extérieur (TA) est plus basse, et
dans lequel ledit moyen de détermination d'état non bloqué détermine que les aubes directrices variables (7c) ne sont pas bloquées lorsque la période de temps de fonctionnement mesurée n'est pas plus courte que la période de temps prédéterminée après le démarrage du moteur.

4. Dispositif de détermination d'anomalies selon l'une des revendications 1 à 3, comprenant en outre:
un moyen de définition d'une ouverture à atteindre pour définir un degré d'ouverture à atteindre (VACMD) qui est une valeur à atteindre du degré d'ouverture (VA) des aubes directrices variables (7c) en fonction des conditions d'exploitation du moteur;
un moyen de commande pour régler le degré d'ouverture (VA) des aubes directrices variables (7c) en fonction du degré d'ouverture à atteindre défini (VACMD); et
un moyen de détection d'ouverture (22) pour détecter le degré d'ouverture (VA) des aubes directrices variables, et
dans lequel ledit moyen de détermination d'anomalies détermine que les aubes directrices variables sont dans l'état anormal lorsqu'une différence entre le degré d'ouverture (VA) détecté des aubes directrices variables (7c) et le degré d'ouverture à atteindre (VACMD) n'est pas supérieure à une valeur prédéterminée.
